# EUROPEAN PATENT APPLICATION

(11) **EP 3 054 715 A1**
(43) Date of publication of application: **10.08.2016**
(21) Application number: 13896188.3
(22) Date of filing: 25.10.2013
(51) Int. Cl.: H04W 12/06

(54) **SERVICE HANDOVER METHOD, NETWORK DEVICE, AND USER EQUIPMENT**

(71) Applicant: Huawei Technologies Co., Ltd., Longgang District Shenzhen, Guangdong 518129 (CN)
(72) Inventor: CHEN, Xiao, Shenzhen Guangdong 518129 (CN); DENG, Tianle, Shenzhen Guangdong 518129 (CN)
(74) Representative: Epping - Hermann - Fischer
(86) International application number: PCT/CN2013/085938
(87) International publication number: WO 2015/058396

(57) **Abstract**

The present invention discloses a service handover method, a network device and user equipment. The method includes: receiving, by a first device, a handover request sent by user equipment UE, where the handover request is used to request to hand over services of the UE to a first target device; and sending, by the first device, a handover command to the UE, where the handover command is used to instruct the UE to hand over at least one service of the services to the first target device and hand over the other service or services to a second target device. In the service handover method provided in the present invention, a device on a network side determines to hand over at least one service of the services of user equipment to a first target device and hand over the other service or services to a second target device, which not only can ensure offloading of the services by using the first target device, but also can make service quality of the services of the user equipment not be lowered because the first target device cannot fully meet a service quality requirement, thereby improving user experience.

## Description

### TECHNICAL FIELD

Embodiments of the present invention relate to the communications field, and more specifically, to a service handover method, a network device and user equipment.

### BACKGROUND

In a Long Term Evolution (Long Term Evolution, LTE for short) network, a macro base station is used to provide signal coverage for user equipment. As user services increase, one or more wireless local area networks (Wireless Local Area Network, WLAN for short) are deployed in a service hotspot area within coverage of the macro base station to meet a requirement for system capability brought by the increase in the user services. A Wireless Fidelity (Wireless Fidelity, WiFi for short) technology is generally used on a WLAN network, and coverage of a WLAN using the WiFi technology is smaller than that of a macro base station.

Within coverage of one macro base station, in a WLAN that includes at least two access points (Access Point, AP for short) with an overlapped area, user equipment generally makes, according to quality of a signal on an air interface, a decision on a WLAN handover, and selects an AP with a strongest signal as a target AP for a handover of the user equipment. In this case, the user equipment disconnects from a source AP that currently provides a service, and establishes a service connection with the target AP. However, the decision on a WLAN handover is performed by the user equipment, which makes it difficult to control user experience and does not help improve user experience after the user equipment is handed over to the target AP.

### SUMMARY

Embodiments of the present invention provide a service handover method, a network device and user equipment, which can maintain uncompromised user experience during a process in which the UE performs a WLAN handover.

A first aspect of the embodiments of the present invention provides a service handover method, including:
receiving, by a first device, a handover request sent by user equipment UE, where the handover request is used to request to hand over services of the UE to a first target device; and
sending, by the first device, a handover command to the UE, where the handover command is used to instruct the UE to hand over at least one service of the services to the first target device and hand over the other service or services to a second target device.

With reference to the first aspect, in a first possible implementation manner of the first aspect, before the sending, by the first device, a handover command to the UE, the method further includes:
determining, by the first device, to hand over at least one service of the services to the first target device, where
at least one of the following information of the first target device is not lower than that of a source device of the UE: signal transmit power headroom, a supported service level capability, a supported security hardening capability, and a maximum transmission rate supported for the services, where the source device of the UE is serving the UE when the UE sends the handover instruction; or
a result of measuring a signal of the first target device by the UE is greater than or equal to a first threshold; or
load of the first target device is less than or equal to a second threshold.

With reference to the first aspect or the first possible implementation manner of the first aspect, in a second possible implementation manner of the first aspect, before the sending, by the first device, a handover command to the UE, the method further includes:
determining, by the first device, to hand over the other service or services to the second target device, where a service quality requirement of the other service or services is higher than a service quality requirement of the at least one service of the services.

With reference to any one of the first aspect to the second possible implementation manner of the first aspect, in a third possible implementation manner of the first aspect, the at least one service of the services that the first device determines to hand over to the first target device includes: a service, in the services, of which a service type is a non-multimedia service; or a service, in the services, of which a service type is a multimedia service whose data buffer size is greater than or equal to a preset threshold.

With reference to any one of the first aspect to the third possible implementation manner of the first aspect, in a fourth possible implementation manner of the first aspect, the other service or services that the first device determines to hand over to the second target device includes: a service, in the services, of which a service type is a multimedia service whose data buffer size is less than a preset threshold.

With reference to any one of the first aspect to the fourth possible implementation manner of the first aspect, in a fifth possible implementation manner of the first aspect, the first target device is a wireless local area network access point WLAN AP, and the second target device is a 3rd Generation Partnership Project 3GPP access device.

With reference to the fifth possible implementation manner of the first aspect, in a sixth possible implementation manner of the first aspect, the first device is any one of the following devices:
the 3GPP access device;
the WLAN AP;
a second WLAN AP, where the second WLAN AP is different from the WLAN AP; and
a centralized control node, where the centralized control node is configured to manage the first target device and the second target device.

With reference to the sixth possible implementation manner of the first aspect, in a seventh possible implementation manner of the first aspect, when the first device is the centralized control node,
the first device receives, by using the first target device, the handover request sent by the UE, and sends the handover command to the UE by using the first target device; or
the first device receives, by using the second target device, the handover request sent by the UE, and sends the handover command to the UE by using the second target device; or
the first device receives, by using a third WLAN AP, the handover request sent by the UE, and sends the handover command to the UE by using the third WLAN AP, where the third WLAN AP is different from the first target device.

A second aspect of the embodiments of the present invention provides a service handover method, including:
sending, by user equipment UE, a handover request to a first device, where the handover request is used to request to hand over services of the UE to a first target device; and
receiving, by the UE, a handover command sent by the first device, where the handover command is used to instruct the UE to hand over at least one service of the services to the first target device and hand over the other service or services to a second target device.

With reference to the second aspect, in a first possible implementation manner of the second aspect, the method further includes:
sending, by the UE, characteristic information to the first device, where the characteristic information is used for the first device to determine to hand over the at least one service of the services to the first target device.

With reference to the first possible implementation manner of the second aspect, in a second possible implementation manner of the second aspect, the characteristic information includes at least one of the following information: signal transmit power headroom of the first target device, a service level capability supported by the first target device, a security hardening capability supported by the first target device, a maximum transmission rate supported by the first target device for the services, load of the first target device, and a correspondence between a service type of the services and a data buffer size of the services.

With reference to any one of the second aspect to the second possible implementation manner of the second aspect, in a third possible implementation manner of the second aspect, the first target device is a wireless local area network access point WLAN AP, and the second target device is a 3rd Generation Partnership Project 3GPP access device.

With reference to the third possible implementation manner of the second aspect, in a fourth possible implementation manner of the second aspect, the first device is any one of the following devices:
the 3GPP access device;
the WLAN AP;
a second WLAN AP, where the second WLAN AP is different from the WLAN AP; and
a centralized control node, where the centralized control node is configured to manage the first target device and the second target device.

With reference to the fourth possible implementation manner of the second aspect, in a fifth possible implementation manner of the second aspect, when the first device is the centralized control node,
the UE sends the handover request to the first device by using the first target device, and receives, by using the first target device, the handover command sent by the first device; or
the UE sends the handover request to the first device by using the second target device, and receives, by using the second target device, the handover command sent by the first device; or
the UE sends the handover request to the first device by using a third WLAN AP, and receives, by using the third WLAN AP, the handover command sent by the first device, where the third WLAN AP is different from the first target device.

A third aspect of the embodiments of the present invention provides a network device for a service handover, including:
a receiver, configured to receive a handover request sent by user equipment UE, where the handover request is used to request to hand over services of the UE to a first target device; and
a transmitter, configured to send a handover command to the UE, where the handover command is used to instruct the UE to hand over at least one service of the services to the first target device and hand over the other service or services to a second target device.

With reference to the third aspect, in a first possible implementation manner of the third aspect, the device further includes:
a processor, configured to determine, before the transmitter sends the handover command to the UE, to hand over the at least one service of the services to the first target device, where
at least one of the following information of the first target device is not lower than that of a source device of the UE: signal transmit power headroom, a supported service level capability, a supported security hardening capability, and a maximum transmission rate supported for the services, where the source device of the UE is serving the UE when the UE sends the handover instruction; or
a result of measuring a signal of the first target device by the UE is greater than or equal to a first threshold; or
load of the first target device is less than or equal to a second threshold.

With reference to the third aspect or the first possible implementation manner of the third aspect, in a second possible implementation manner of the third aspect,
the processor is further configured to determine, before the transmitter sends the handover command to the UE, to hand over the other service or services to the second target device, where a service quality requirement of the other service or services is higher than a service quality requirement of the at least one service of the services.

With reference to any one of the third aspect to the second possible implementation manner of the third aspect, in a third possible implementation manner of the third aspect, the at least one service of the services that the processor determines to hand over to the first target device includes: a service, in the services, of which a service type is a non-multimedia service; or a service, in the services, of which a service type is a multimedia service whose data buffer size is greater than or equal to a preset threshold.

With reference to any one of the third aspect to the third possible implementation manner of the third aspect, in a fourth possible implementation manner of the third aspect, the other service or services that the processor determines to hand over to the second target device includes: a service, in the services, of which a service type is a multimedia service whose data buffer size is less than a preset threshold.

With reference to any one of the third aspect to the fourth possible implementation manner of the third aspect, in a fifth possible implementation manner of the third aspect, the first target device is a wireless local area network access point WLAN AP, and the second target device is a 3rd Generation Partnership Project 3GPP access device.

With reference to the fifth possible implementation manner of the third aspect, in a sixth possible implementation manner of the third aspect, the network device is any one of the following devices:
the 3GPP access device;
the WLAN AP;
a second WLAN AP, where the second WLAN AP is different from the WLAN AP; and
a centralized control node, where the centralized control node is configured to manage the first target device and the second target device.

With reference to the sixth possible implementation manner of the third aspect, in a seventh possible implementation manner of the third aspect, when the network device is the centralized control node,
the receiver receives, by using the first target device, the handover request sent by the UE, and the transmitter sends the handover command to the UE by using the first target device; or
the receiver receives, by using the second target device, the handover request sent by the UE, and the transmitter sends the handover command to the UE by using the second target device; or
the receiver receives, by using a third WLAN AP, the handover request sent by the UE, and the transmitter sends the handover command to the UE by using the third WLAN AP, where the third WLAN AP is different from the first target device.

A fourth aspect of the embodiments of the present invention provides user equipment, including:
a transmitter, configured to send a handover request to a first device, where the handover request is used to request to hand over services of the user equipment to a first target device; and
a receiver, configured to receive a handover command sent by the first device, where the handover command is used to instruct the user equipment to hand over at least one service of the services to the first target device and hand over the other service or services to a second target device.

With reference to the fourth aspect, in a first possible implementation manner of the fourth aspect,
the transmitter is further configured to send characteristic information to the first device, where the characteristic information is used for the first device to determine to hand over the at least one service of the services to the first target device.

With reference to the first possible implementation manner of the fourth aspect, in a second possible implementation manner of the fourth aspect, the characteristic information includes at least one of the following information: signal transmit power headroom of the first target device, a service level capability supported by the first target device, a security hardening capability supported by the first target device, a maximum transmission rate supported by the first target device for the services, load of the first target device, and a correspondence between a service type of the services and a data buffer size of the services.

With reference to any one of the fourth aspect to the second possible implementation manner of the fourth aspect, in a third possible implementation manner of the fourth aspect, the first target device is a wireless local area network access point WLAN AP, and the second target device is a 3rd Generation Partnership Project 3GPP access device.

With reference to the third possible implementation manner of the fourth aspect, in a fourth possible implementation manner of the fourth aspect, the network device is any one of the following devices:
the 3GPP access device;
the WLAN AP;
a second WLAN AP, where the second WLAN AP is different from the WLAN AP; and
a centralized control node, where the centralized control node is configured to manage the first target device and the second target device.

With reference to the fourth possible implementation manner of the fourth aspect, in a fifth possible implementation manner of the fourth aspect, when the network device is the centralized control node,
the transmitter is specifically configured to send the handover request to the first device by using the first target device, and the receiver is specifically configured to receive, by using the first target device, the handover command sent by the first device; or
the transmitter is specifically configured to send the handover request to the first device by using the first target device, and the receiver is specifically configured to receive, by using the second target device, the handover command sent by the first device; or
the transmitter is specifically configured to send the handover request to the first device by using a third WLAN AP, and the receiver is specifically configured to receive, by using the third WLAN AP, the handover command sent by the first device, where the third WLAN AP is different from the first target device.

Based on the foregoing technical solutions, according to the service handover method, the network device and the user equipment that are provided in the embodiments of the present invention, a device on a network side determines to hand over at least one service of services of the user equipment to a first target device and hand over the other service or services to a second target device, which not only can ensure offloading of the services by using the first target device, but also can make service quality of the services of the user equipment not be lowered because the first target device cannot fully meet a service quality requirement, thereby improving user experience.

### BRIEF DESCRIPTION OF DRAWINGS

To describe the technical solutions in the embodiments of the present invention more clearly, the following briefly describes the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a service handover method according to an aspect of the embodiments of the present invention;
FIG. 2 is a schematic flowchart of a service handover method according to another aspect of the embodiments of the present invention;
FIG. 3 is a schematic flowchart of a service handover method according to another aspect of the embodiments of the present invention;
FIG. 4 is a schematic flowchart of a service handover method according to another aspect of the embodiments of the present invention;
FIG. 5 is a schematic flowchart of a service handover method according to another aspect of the embodiments of the present invention;
FIG. 6 is a schematic flowchart of a service handover method according to another aspect of the embodiments of the present invention;
FIG. 7 is a schematic structural diagram of a network device for a service handover according to an aspect of the embodiments of the present invention; and
FIG. 8 is a schematic structural diagram of user equipment according to an aspect of the embodiments of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (Global System of Mobile communication, GSM for short), a Code Division Multiple Access (Code Division Multiple Access, CDMA for short) system, a Wideband Code Division Multiple Access (Wideband Code Division Multiple Access, WCDMA for short) system, a general packet radio service (General Packet Radio Service, GPRS for short), a Long Term Evolution (Long Term Evolution, LTE for short) system, an LTE frequency division duplex (Frequency Division Duplex, FDD for short) system, an LTE time division duplex (Time Division Duplex, TDD for short) system, a Universal Mobile Telecommunications System (Universal Mobile Telecommunication System, UMTS for short), a Worldwide Interoperability for Microwave Access (Worldwide Interoperability for Microwave Access, WiMAX for short) communications system or the like.

It should also be understood that in the embodiments of the present invention, user equipment (User Equipment, UE for short) may be referred to as a terminal (Terminal), a mobile station (Mobile Station, MS for short), a mobile terminal (Mobile Terminal), and the like. The user equipment may communicate with one or more core networks through a radio access network (Radio Access Network, RAN for short). For example, the user equipment may be a mobile phone (also referred to as a "cellular" phone) or a computer with a mobile terminal. For example, the user equipment may also be a portable, pocket-sized, handheld, computer built-in, or in-vehicle mobile apparatus, which exchanges voice and/or data with the radio access network. The user equipment in the embodiments of the present invention may also be referred to as a station (Station, STA for short).

In the embodiments of the present invention, a service handover may refer to a handover of UE between different base stations in a cellular network; or may refer to a handover of UE between different APs in a WLAN, that is, the UE disconnects from a current AP and establishes a connection with a target AP; or may refer to a handover of UE between radio access devices of different standards. The embodiments of the present invention are not limited thereto.

The service handover method, the network device for a service handover, and the user equipment that are provided in the embodiments of the present invention may combine with each other. For same or similar concepts or processes, details are not described in all embodiments.

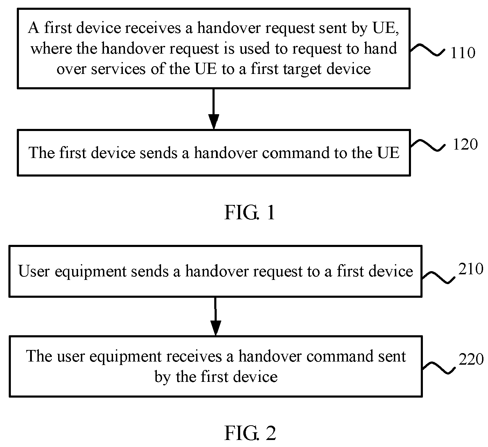

FIG. 1 is a schematic flowchart of a service handover method 100 according to an aspect of the embodiments of the present invention. The method may be executed by a first device, where the first device is a device on a network side. As shown in FIG. 1, the method 100 includes:
S110. The first device receives a handover request sent by UE, where the handover request is used to request to hand over services of the UE to a first target device.

The UE is triggered to measure a signal in a neighboring cell when service quality of a source cell that serves the UE cannot meet a service requirement, or the UE periodically measures a signal in a neighboring cell The UE then selects an access device corresponding to a cell with best signal quality in the neighboring cell as the first target device and requests, by sending the handover request, the first device to hand over the services of the UE to the first target device.

S120. The first device sends a handover command to the UE, where the handover command is used to instruct the UE to hand over at least one service of the services to the first target device and hand over the other service or services to a second target device.

Optionally, before the first device sends the handover command to the UE, the first device determines to hand over the at least one service to the first target device. At least one of the following information of the first target device is not lower than that of the source device of the UE: signal transmit power headroom, a supported service level capability, a supported security hardening capability, and a maximum transmission rate supported for the services, where the source device of the UE is serving the UE when the UE sends the handover instruction; or a result of measuring a signal of the first target device by the UE is greater than or equal to a first threshold; or load of the first target device is less than or equal to a second threshold.

Specifically, the signal transmit power headroom of the first target device is not less than the signal transmit power headroom of the source device of the UE, so that the first target device is capable of improving transmit power of a signal, the UE receives a signal with stronger power, and the UE obtains better signal coverage. The service level capability of the first target device is not lower than the service level capability of the source device of the UE, so that a service level of a service that is handed over to the first target device is not lower than a service level of the service provided by the source device of the UE, thereby improving user experience of the UE. The security hardening capability supported by the first target device is not lower than the security hardening capability supported by the source device of the UE, so that security (such as personal privacy or a financial service) of the service that is handed over to the first target device, and the like can be ensured regardless of the service handover. The maximum transmission rate supported by the first target device for the services is not less than the maximum transmission rate supported by the source device of the UE for the services, which can ensure that normal transmission of the service that is handed over by the UE to the first target device. The result of measuring the signal of the first target device by the UE is greater than or equal to the first threshold, where the first threshold may be set according to an engineering experience or on a basis that it can be ensured that service quality of the service that is handed over to the first target device is not lower than that of the source device of the UE. The load of the first target device is less than or equal to the second threshold, where the second threshold may be set according to an operator policy or an operation and maintenance status of a network, so that a load increase brought by the service that is handed over to the first target device does not reduce service quality of a service carried by the first target device.

Optionally, before the first device sends the handover command to the UE, the foregoing method may further include: determining, by the first device, to hand over the other service or services of the UE to the second target device, where a service quality requirement of the other service or services is higher than a service quality requirement of the part of the services of the UE.

The first device may hand over the part of the services of the UE to the first target device to which the UE requests to hand over, and the service quality provided by the first target device for the part of the services is not lower than the service quality provided by the source device of the UE, where the source device of the UE is an access device that provides a service for the UE before the services of the UE are handed over. The first target device may be determined by the UE based on measurement of the signal in the neighboring cell. Because a measurement capability of the UE is limited and sometimes the UE cannot accurately determine an access device that meets a service quality requirement, the first target device to which the UE requests to hand over all the services possibly cannot provide all the services of the UE with service quality not lower than that of the source device of the UE. The first device may instruct the UE to hand over the part of all the services of the UE to the first target device that can meet the service quality requirement of the part of the services. Because the service quality requirement of the other service or services is higher than the quality requirement of the part of the services, the first device may instruct the UE to hand over the another part of all the services to the second target device that meets the service quality requirement of the other service or services.

Optionally, the service quality may be determined by at least one of the following factors:
signal transmit power headroom, a supported service level capability, a supported security hardening capability, a maximum transmission rate supported for the services of the UE, quality of measuring a signal of the second target device by the UE, load of the second target device, and the like.

The handover request sent by the UE to the first device is used to request to hand over all the services of the UE to the first target device. However, if all the services of the UE are handed over to the first target device, a quality requirement of all the services possibly cannot be ensured. Therefore, the first device may hand over, to the first target device, at least one service of the services that are requested to be handed over to the first target device; and hand over, to the second target device, the other service or services whose service quality requirement is higher than that of the part of the services, so that the second target device provides the other service or services.

Optionally, the part of the services that the first device determines to hand over to the first target device includes: a service, in the services of the UE, of which a service type is a non-multimedia service; or a service, in the services of the UE, of which a service type is a multimedia service whose data buffer size is greater than or equal to a preset threshold.

Generally, a service quality requirement of a non-multimedia service is lower than that of a multimedia service. The non-multimedia service may be handed over to the first target device to which the UE requests to hand over, and carried by the first target device. For the multimedia service whose data buffer size is greater than or equal to the preset threshold, due to a sufficient data buffer size and low sensitivity to a delay, the multimedia service may also be handed over to the first target device.

Accordingly, the first device may determine that the other service or services handed over to the second target device is a multimedia service whose data buffer size is less than a preset threshold. Generally, a service quality requirement of a multimedia service is higher than that of a non-multimedia service, and when a data buffer size of the multimedia service is less than the preset threshold, the multimedia service is more sensitive to a delay, which tends to cause a decrease in user experience. Therefore, the multimedia service whose data buffer size is less than the preset threshold is handed over to the second target device. The foregoing threshold may be specified according to an engineering experience or may be set according to an operator policy or a requirement of a user for a delay.

In this embodiment of the present invention, the first target device is a WLAN access point (Access Point, AP for short), and the second target device is a 3rd Generation Partnership Project (The 3rd Generation Partnership Project, 3GPP for short) access device.

It can be understood that in this embodiment of the present invention, the 3GPP access device may be a base transceiver station (Base Transceiver Station, BTS for short) in a GSM or CDMA, or may be a NodeB (NodeB) in WCDMA, or may be an evolved NodeB (evolved NodeB, eNB or e-NodeB for short) in LTE. In this embodiment of the present invention, an access point (Access point, AP for short) on a WLAN may be a separate AP, where the separate AP is controlled and managed by an access controller (Access Controller, AC for short), or may be an AP with a function of an AC, which is not limited in the present invention.

In this embodiment of the present invention, the first device and the second target device may be a same device, that is, a same 3GPP access device; or the first device and the first target device may be a same device, that is, a same WLAN AP; or the first device may be a second WLAN AP, where the second WLAN AP may be different from the first target device; or the first device may be a centralized control node, such as a single RAN controller (Single RAN controller, SRAN for short), where the centralized control node is configured to manage the first target device and the second target device, for example, control resource allocation and scheduling of the first target device and the second target device.

Accordingly, when the first device is the centralized control node, the first device receives, by using the first target device, the handover request sent by the UE, and sends the handover command to the UE by using the first target device; or when the first device is the centralized control node, the first device receives, by using the second target device, the handover request sent by the UE, and sends the handover command to the UE by using the second target device; or when the first device is the centralized control node, the first device receives, by using a third WLAN AP, the handover request sent by the UE, and sends the handover command to the UE by using the third WLAN AP, where the third WLAN AP is different from the first target device.

Optionally, in S110, the handover request sent by the UE may include an identifier of the first target device, and in S120, the handover command sent by the first device to the UE may include an identifier of the second target device and the identifier of the first target device, or may include only an identifier of the second target device. The identifier may be, for example, an Internet Protocol (Internet Protocol, IP for short) address, a basic service set identifier (Basic Service Set Identifier, BSSID for short), a service set identifier (Service Set Identifier, SSID for short), an extended service set identifier (Extended Service Set Identifier, ESSID for short), a Medium Access Control (Medium Access Control, MAC for short) address, or the like. This embodiment of the present invention is not limited thereto.

Optionally, in S110, the handover request may further include identifiers IDs of the services of the UE and a service quality requirement (for example, QoS) corresponding to the services, where the service quality requirement may be QoS corresponding to common user experience of the services; optionally, the handover request may further include a service type, and a data buffer size of a service corresponding to the type. This embodiment of the present invention is not limited thereto.

Based on the foregoing technical solutions, in the service handover method provided in this embodiment of the present invention, a device on a network side determines to hand over a part of services of user equipment to a first target device and hand over the other service or services to a second target device, which not only can ensure offloading of the services by using the first target device, but also can make service quality of the services of the user equipment not be lowered because the first target device cannot fully meet a service quality requirement of all the services, thereby improving user experience.

FIG. 2 is a schematic flowchart of a service handover method 200 according to another aspect of the embodiments of the present invention. The method may be executed by user equipment UE. As shown in FIG. 2, the method 200 includes:
S210. The user equipment sends a handover request to a first device, where the handover request is used to request to hand over services of the UE to a first target device.

When the user equipment detects that service quality decreases, for example, a delay is too large when a multimedia service is being watched, the user equipment may measure a signal in a neighboring cell, determine, according to quality of the signal in the neighboring cell, a first target device that is considered by the user equipment to be able to meet a service quality requirement, and request to hand over all the services to the first target device. Optionally, an identifier of the first target device may be carried in the handover request, so that the first device can accurately learn a specific device requested by the user equipment.

S220. The user equipment receives a handover command sent by the first device, where the handover command is used to instruct the user equipment to hand over a part of all the services of the UE to the first target device and hand over another part of all the services to a second target device.

Optionally, a service identifier of a service that is handed over to the first target device and a service identifier of a service that is handed over to the second target device may be carried in the handover command.

Optionally, the method may further include:
S230. The user equipment sends characteristic information to the first device, where the characteristic information is used for the first device to determine to hand over the part of the services to the first target device. Optionally, the characteristic information may be carried in the handover request. The characteristic information may include at least one of the following items:
   signal transmit power headroom of the first target device, a service level capability supported by the first target device, a security hardening capability supported by the first target device, a maximum transmission rate supported by the first target device for the services, load of the first target device, and a correspondence between a service type of the services of the user equipment and a data buffer size of the services.

The characteristic information in the following embodiments is the same, and details are not described again in the following embodiments.

After the first device receives the handover request sent by the user equipment, the first device may determine, by using the foregoing characteristic information, whether the first target device can meet a service quality requirement of all the services of the user equipment. If the first target device meets the service quality requirement of all the services of the user equipment, the first device may instruct the user equipment to hand over a part of all the services that can meet the service quality requirement to the first target device. If the first target device does not meet the service quality requirement of all the services of the user equipment, the first device may instruct the user equipment to hand over the other service or services that cannot meet the service quality requirement to the second target device that can meet the service quality requirement of the other service or services.

For example, for a service whose service type is a multimedia service whose data buffer size is greater than a preset threshold, the multimedia service does not impair user experience due to a delay caused by a common handover process, and the first device may instruct the user equipment to hand over the multimedia service to the first target device to which the user equipment requests to hand over.

In this embodiment of the present invention, the first target device is a WLAN access point (Access Point, AP for short), and the second target device is a 3rd Generation Partnership Project (The 3rd Generation Partnership Project, 3GPP for short) access device.

In this embodiment of the present invention, the first device and the second target device may be a same device, that is, a same 3GPP access device; or the first device and the first target device may be a same device, that is, a same WLAN AP; or the first device may be a second WLAN AP, where the second WLAN AP may be different from the first target device; or the first device may be a centralized control node, such as a SRAN, where the centralized control node is configured to manage the first target device and the second target device, for example, control resource allocation and scheduling of the first target device and the second target device.

Accordingly, when the first device is the centralized control node, the user equipment sends the handover request to the first device by using the first target device, and receives, by using the first target device, the handover command sent by the first device; or the user equipment sends the handover request to the first device by using the second target device, and receives, by using the second target device, the handover command sent by the first device; or the user equipment sends the handover request to the first device by using a third WLAN AP, and receives, by using the third WLAN AP, the handover command sent by the first device, where the third WLAN AP is different from the first target device.

In the service handover method provided in this embodiment of the present invention, a device on a network side determines to hand over a part of services of user equipment to a first target device and hand over the other service or services to a second target device, which not only can ensure offloading of the services by using the first target device, but also can make service quality of the services of the user equipment not be lowered because the first target device cannot fully meet a service quality requirement, thereby improving user experience.

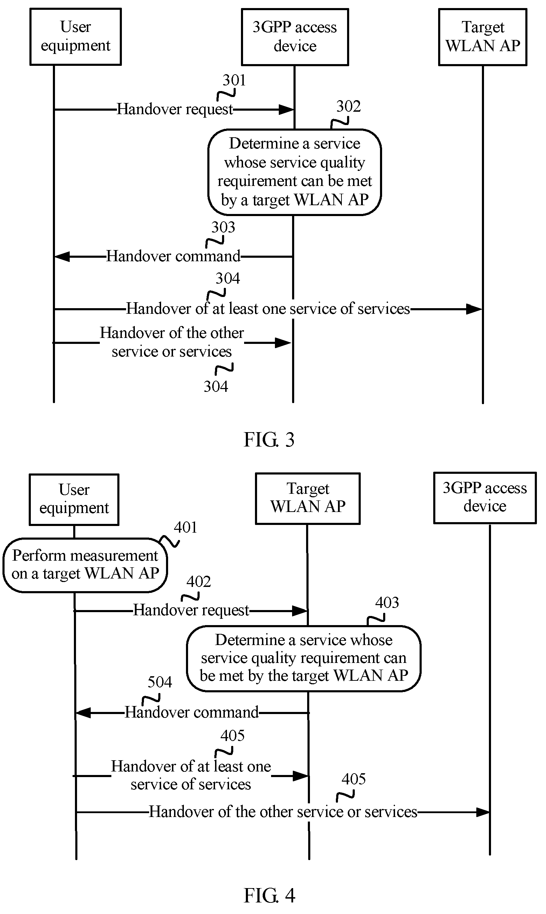

FIG. 3 is a schematic flowchart of a service handover method according to another aspect of the embodiments of the present invention. The embodiment shown in FIG. 3 is a specific example of the embodiment shown in FIG. 1 or FIG. 2, where a first device and a second target device is a same 3GPP access device, a first target device is a WLAN AP (denoted as a target WLAN AP), and a source device of user equipment is a WLAN AP (denoted as a source WLAN AP) different from the first target device. In this embodiment, the source WLAN AP and the target WLAN AP perform resource scheduling and a communication process under management of the 3GPP access device, and a typical scenario is that in a heterogeneous network, the source

WLAN AP and the target WLAN AP are located within coverage or on the edge of coverage of the 3GPP access device. As shown in FIG. 3, the method includes the following steps:
S301. When the user equipment performs measurement on the target WLAN AP in a periodically reporting or an event triggering manner, and a result of measuring a signal of the target WLAN AP is greater than a threshold (the threshold may be set according to an engineering experience, an operator policy, or user experience) or greater than that of the source WLAN AP, the user equipment sends a handover request to the 3GPP access device, where the handover request is used to request to hand over services of the user equipment to the first target device.

Optionally, the handover request may include an identifier of the target WLAN AP or an identifier of a service that the user equipment requests to hand over, so that the 3GPP access device identifies the target WLAN AP or identifies the service that the user equipment requests to hand over.

The user equipment may measure a beacon (beacon) signal of the target WLAN AP and acquire a result of measuring a signal of the target WLAN AP by the user equipment.

S302. The 3GPP access device responds to the handover request sent by the user equipment, and determines a service whose service quality requirement can be met by the target WLAN AP requested by the user equipment.

Because on the heterogeneous network, the 3GPP access device can control and manage the target WLAN AP, characteristic information of the target WLAN AP may be stored in the 3GPP access device, where the characteristic information may be signal transmit power headroom of the target WLAN AP, a service level capability supported by the target WLAN AP, a security hardening capability supported by the target WLAN AP, a maximum transmission rate supported by the target WLAN AP for the services, load of the target WLAN AP, and a correspondence between a service type of the services and a data buffer size of the services. The 3GPP access device may determine, according to the characteristic information of the target WLAN AP and from the services of the user equipment, the service whose service quality requirement can be met by the target WLAN AP. Alternatively, the characteristic information of the target WLAN AP may be included in the beacon signal of the target WLAN AP. The user equipment may acquire the characteristic information of the target WLAN AP from the beacon signal broadcast by the target WLAN AP, and send the characteristic information of the target WLAN AP to the 3GPP access device, so that the 3GPP access device determines the service whose service quality requirement can be met by the target WLAN AP.

S303. The 3GPP access device sends a handover command to the user equipment, where the handover command is used to instruct the user equipment to hand over at least one service of the services whose service quality requirement can be met by the target WLAN AP to the target WLAN AP, and hand over the other service or services whose service quality requirement cannot be met by the target WLAN AP to the 3GPP access device.

S304. The user equipment hands over, according to the handover command, the part of the services whose service quality requirement can be met by the target WLAN AP to the target WLAN AP, and the other service or services whose service quality requirement cannot be met by the target WLAN AP to the 3GPP access device.

Further, after the user equipment hands over the part of the services to the target WLAN AP and hands over the other service or services to the 3GPP access device, the user equipment may disconnect from the source WLAN AP, and the source WLAN AP may release a resource occupied by the user equipment from the source WLAN AP.

In the used technical solutions provided in this embodiment of the present invention, a 3GPP access device determines to hand over a part of services of user equipment to a target WLAN AP that meets a service quality requirement of the part of the services, and hand over the other service or services whose service quality requirement cannot be met by the target WLAN AP to the 3GPP access device, which not only can ensure offloading of the services by using the target WLAN AP, but also can make service quality of the services of the user equipment not be lowered because the target WLAN AP cannot meet a service quality requirement of all the services, thereby improving user experience.

FIG. 4 is a schematic flowchart of a service handover method according to another aspect of the embodiments of the present invention. The embodiment shown in FIG. 4 is a specific example of the embodiment shown in FIG. 1 or FIG. 2, where a first device and a first target device may be a same WLAN AP (denoted as a target WLAN AP), a second target device is a 3GPP access device, and a source device of user equipment is denoted as a source WLAN AP. In a heterogeneous network, the source WLAN AP and the target WLAN AP are located within coverage or on the edge of coverage of the 3GPP access device, and perform resource scheduling and a communication process under management of the 3GPP access device.

S401. The user equipment measures a beacon signal of the target WLAN AP in a periodically reporting or an event triggering manner and acquires a result of measuring a signal of the target WLAN AP.

S402. If the result of measuring the signal of the target WLAN AP by the user equipment is greater than a threshold (the threshold may be set according to an engineering experience, an operator policy, or user experience) or greater than a result of measuring a signal of the source WLAN AP by the user equipment, the user equipment sends a handover request to the target WLAN AP, where the handover request is used to request to hand over services of the user equipment to the target WLAN AP.

Optionally, an identifier of the services of the user equipment is carried in the handover request.

S403. The target WLAN AP responds to the handover request sent by the user equipment, and determines a service whose service quality requirement can be met by the target WLAN AP.

S404. The target WLAN AP sends a handover command to the user equipment, where the handover command is used to instruct the user equipment to hand over at least one service of the services whose service quality requirement can be met by the target WLAN AP to the target WLAN AP, and hand over the other service or services of the user equipment to the 3GPP access device.

In this case, the target WLAN AP may determine, according to the following information, the service whose service quality requirement can be met by the target WLAN AP: signal transmit power headroom of the target WLAN AP, a service level capability supported by the target WLAN AP, a security hardening capability supported the target WLAN AP, a maximum transmission rate supported by the target WLAN AP for the services, load of the target WLAN AP, a correspondence between a service type of the services and a data buffer size of the services (the correspondence may be sent by the user equipment to the target WLAN AP by using the handover request or other signaling), or the like. The target WLAN AP instructs the UE to hand over the part of the services to the target WLAN AP, and hand over the other service or services whose service quality requirement cannot be met by the target WLAN AP to the 3GPP access device.

S405. The user equipment hands over, according to the handover command, the part of the services whose service quality requirement can be met by the target WLAN AP to the target WLAN AP, and the other service or services whose service quality requirement cannot be met by the target WLAN AP to the 3GPP access device.

In the used technical solutions provided in this embodiment of the present invention, a target WLAN AP determines to hand over a part of services of user equipment to the target WLAN AP that meets a service quality requirement of the part of the services, and hand over the other service or services whose service quality requirement cannot be met by the target WLAN AP to a 3GPP access device, which not only can ensure offloading of the services by using the target WLAN AP, but also can make service quality of the services of the user equipment not be lowered because the target WLAN AP cannot meet a service quality requirement of all the service, thereby improving user experience.

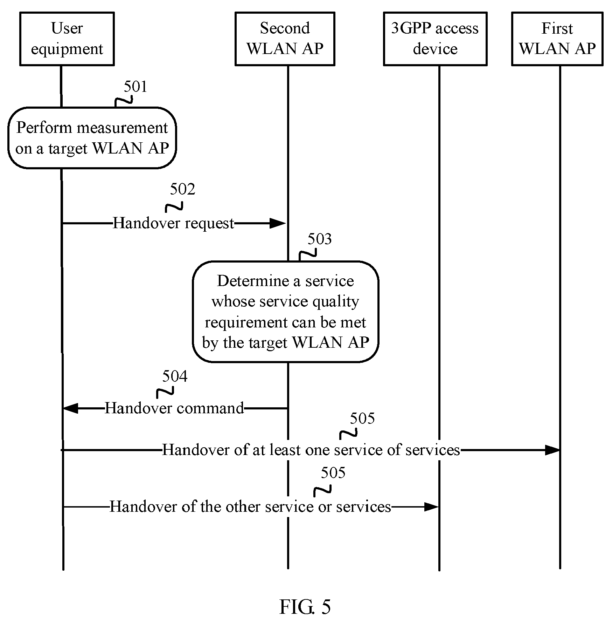

FIG. 5 is a schematic flowchart of a service handover method according to another aspect of the embodiments of the present invention. The embodiment shown in FIG. 5 is a specific example of the embodiment shown in FIG. 1 or FIG. 2, where a first target device is a target WLAN AP (denoted as a first WLAN AP), a second target device is a 3GPP access device, and a first device is a second WLAN AP, where the second WLAN AP is different from the first WLAN AP. The method includes the following content:
S501. User equipment performs measurement on the target WLAN AP.

That the user equipment performs measurement on a neighboring WLAN may be that the user equipment is triggered to measure a signal (such as a beacon signal) on the neighboring WLAN when service quality of a source WLAN of the user equipment cannot meet a service quality requirement, or may be that the user equipment periodically measures a signal on the neighboring WLAN. Then an AP in a WLAN with best signal quality on the neighboring WLAN is selected as the first WLAN AP.

S502. The user equipment sends a handover request to the second WLAN AP, where the handover request is used to request to hand over services of the user equipment to the first WLAN AP.

The Second WLAN AP may be or may not be the source device of the user equipment.

S503. The second WLAN AP responds to the handover request sent by the user equipment, acquires characteristic information, and determines, according to the characteristic information, a service whose service quality requirement can be met by the first WLAN AP.

As a WLAN manager, the 3GPP access device can easily learn the characteristic information. Therefore, the second WLAN AP may request the characteristic information from the 3GPP access device, and determines, according to the requested characteristic information, the service whose service quality requirement can be met by the first WLAN AP. Alternatively, the characteristic information may be sent by the first WLAN AP to the second WLAN AP, so that the second WLAN AP determines the service whose service quality requirement can be met by the first WLAN AP.

S504. The second WLAN AP sends a handover command to the user equipment, where the handover command is used to instruct the user equipment to hand over at least one service of the services whose service quality requirement can be met by the first WLAN AP to the first WLAN AP, and hand over the other service or services whose service quality requirement cannot be met by the first WLAN AP to the 3GPP access device.

Optionally, the second WLAN AP may add, to the handover command, an identifier of the part of the services whose service quality requirement can be met by the first WLAN AP and an identifier of the other service or services whose service quality requirement cannot be met by the first WLAN AP, and send the handover command to the user equipment.

S505. The user equipment hands over, according to the handover command, the part of the services whose service quality requirement can be met by the first WLAN AP to the first WLAN AP, and the other service or services whose service quality requirement cannot be met by the first WLAN AP to the 3GPP access device.

In the used technical solutions provided in this embodiment of the present invention, a second WLAN AP determines to hand over a part of services of user equipment to a first WLAN AP that meets a service quality requirement of the part of the services, and hand over the other service or services whose service quality requirement cannot be met by the first WLAN AP to a 3GPP access device, which not only can ensure offloading of the services by using the first WLAN AP, but also can make service quality of the services of the user equipment not be lowered because the first WLAN AP cannot meet a service quality requirement of all the services, thereby improving user experience.

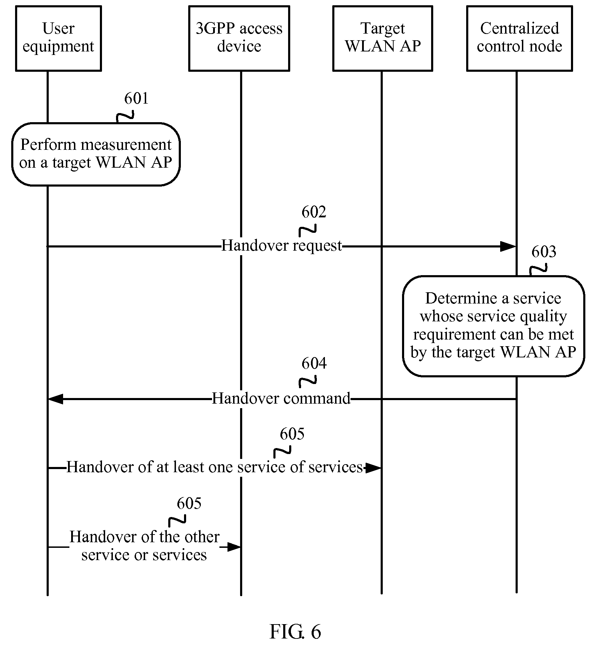

FIG. 6 is a schematic flowchart of a service handover method according to another aspect of the embodiments of the present invention. The embodiment shown in FIG. 6 is a specific example of the embodiment shown in FIG. 1 or FIG. 2, where a first target device is a target WLAN AP, a second target device is a 3GPP access device, and a first device is a centralized control node. The method includes the following content:
S601. User equipment performs measurement on the target WLAN AP.

That the user equipment performs measurement on a neighboring WLAN may be that the user equipment is triggered to measure a signal (such as a beacon signal) on the neighboring WLAN when service quality of a source WLAN of the user equipment cannot meet a service quality requirement, or may be that the user equipment periodically measures a signal on the neighboring WLAN. Then an AP in a WLAN with best signal quality on the neighboring WLAN is selected as the target WLAN AP.

S602. The user equipment sends a handover request to the centralized control node, where the handover request is used to request to hand over services of the user equipment to the target WLAN AP.

An identifier of the services of the user equipment may be included in the handover request. The user equipment may send the handover request to the centralized control node by using the target WLAN AP, the 3GPP access device, or a third WLAN AP that is different from the target WLAN AP, where the third WLAN AP may be the source WLAN AP of the user equipment, or may not be the source WLAN AP.

S603. The centralized control node responds to the handover request sent by the user equipment, acquires characteristic information, and determines, according to the characteristic information, a service whose service quality requirement can be met by the target WLAN AP.

Because the centralized control node, such as a SRAN, can manage the target WLAN AP and the 3GPP access device, the centralized control node may obtain the characteristic information from the target WLAN AP, the user equipment, or the 3GPP access device, and determines, according to the characteristic information, the service whose service quality requirement can be met by the target WLAN AP, and a service whose service quality requirement cannot be met by the target WLAN AP.

S604. The centralized control node sends a handover command to the user equipment, where the handover command is used to instruct the user equipment to hand over at least one service of the services whose service quality requirement can be met by the target WLAN AP to the target WLAN AP, and hand over the other service or services whose service quality requirement cannot be met by the target WLAN AP to the 3GPP access device.

Optionally, the centralized control node may send the handover command to the user equipment by using the 3GPP access device, the target WLAN AP, or the third WLAN AP that is different from the target WLAN AP.

S605. The user equipment hands over, according to the handover command, the part of the services whose service quality requirement can be met by the target WLAN AP to the target WLAN AP, and the other service or services whose service quality requirement cannot be met by the target WLAN AP to the 3GPP access device.

In the used technical solutions provided in this embodiment of the present invention, a centralized control node determines to hand over a part of services of user equipment to a target WLAN AP that meets a service quality requirement of the part of the services, and hand over the other service or services whose service quality requirement cannot be met by the target WLAN AP to a 3GPP access device, which not only can ensure offloading of the services by using a WLAN AP, but also can make service quality of the services of the user equipment not be lowered because the WLAN AP cannot meet a service quality requirement of all the services, thereby improving user experience.

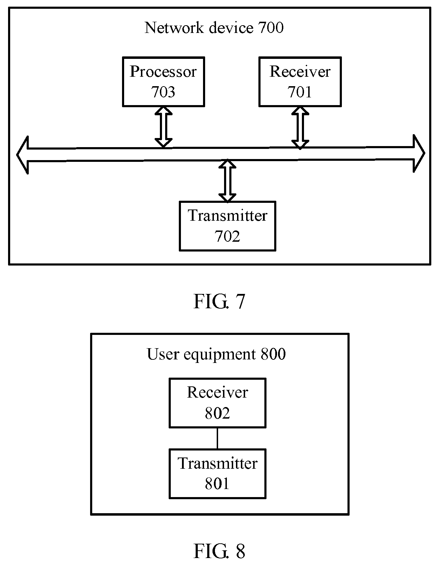

FIG. 7 is a schematic structural diagram of a network device 700 for a service handover according to an aspect of the embodiments of the present invention. The network device may be the first device in any one of the embodiments shown in FIG. 1 to FIG. 6. Details about the concepts or processes described in any one of the embodiments in FIG. 1 to FIG. 6 may not be described again in this embodiment. The network device 700 includes a receiver 701 and a transmitter 702.

The receiver 701 is configured to receive a handover request sent by user equipment, where the handover request is used to request to hand over services of the UE to a first target device.

The transmitter 702 is configured to send a handover command to the UE, where the handover command is used to instruct the UE to hand over at least one service of the services to the first target device and hand over the other service or services to a second target device.

Optionally, the network device 700 further includes a processor 703, configured to determine, before the transmitter 702 sends the handover command to the user equipment, to hand over, to the first target device, the part of the services that the user equipment requests to hand over. At least one of the following information of the first target device is not lower than that of a source device of the user equipment: signal transmit power headroom, a supported service level capability, a supported security hardening capability, and a maximum transmission rate supported for the services, where the source device of the UE is serving the UE when the UE sends the handover instruction; or a result of measuring a signal of the first target device by the UE is greater than or equal to a first threshold; or load of the first target device is less than or equal to a second threshold.

Optionally, the processor 703 is further configured to determine, before the transmitter 701 sends the handover command to the user equipment, to hand over the other service or services to the second target device, where a service quality requirement of the other service or services is higher than a service quality requirement of the part of the services.

Specifically, the receiver 701 is configured to receive the handover request sent by the user equipment. The processor 703 responds to the handover request, determines a service whose service quality requirement is met by the first target device to which the user equipment requests to hand over the services, and sends a handover command to the user equipment, where the handover command instructs the user equipment to hand over the part of the services whose service quality requirement can be met by the first target device to the first target device, and hand over the other service or services whose service quality requirement is met by the first target device to the second target device. For a specific process, reference may be made to the method embodiments shown in FIG. 1 to FIG. 6, and details are not described again in this embodiment.

Optionally, the part of the services that the processor 703 determines to hand over to the first target device includes: a service whose service type is a non-multimedia service; or a service whose service type is a multimedia service whose data buffer size is greater than or equal to a preset threshold.

Optionally, the other service or services that the processor 703 determines to hand over to the second target device includes: a service whose service type is a multimedia service whose data buffer size is greater than a preset threshold.

The foregoing thresholds may be specified according to an engineering experience or may be set according to an operator policy or the like.

In this embodiment of the present invention, the first target device may be a WLAN AP, and the second target device may be a 3GPP access device.

Accordingly, the first device and the second target device may be a same device; or the first device and the first target device may be a same device; or the first device may be a second WLAN AP, where the second WLAN AP is different from the first target device; or the network device is a centralized control node, where the centralized control node is configured to manage the first target device and the second target device and control resource scheduling of the first target device and the second target device.

Optionally, if the network device is the centralized control node, the receiver 701 receives, by using the first target device, the handover request sent by the user equipment, and the transmitter 702 sends the handover command to the user equipment by using the first target device; or the receiver 701 receives, by using the second target device, the handover request sent by the user equipment, and the transmitter 702 sends the handover command to the user equipment by using the second target device; or the receiver 701 receives, by using a third WLAN AP, the handover request sent by the user equipment, and the transmitter 702 sends the handover command to the user equipment by using the third WLAN AP, where the third WLAN AP is different from the first target device.

It should be understood that the processor 703 in this embodiment may be a central processing unit (Central Processing Unit, CPU for short), or the processor may be another general purpose processor, a digital signal process (DSP), an application-specific integrated circuit (ASIC), a field programmable gate array (FPGA) or another programmable logic device, a discrete gate or a transistor logic device, a discrete hardware component, or the like. The general purpose processor may a microprocessor, or the processor may be any conventional processor or the like.

In the used network device 700 provided in this embodiment of the present invention, the network device 700 determines to hand over a part of services of user equipment to a first target device that can meet a service quality requirement of the part of the services, and hand over the other service or services whose service quality requirement cannot be met by the first target device to a 3GPP access device, which not only can ensure offloading of the services by using a WLAN AP, but also can make service quality of the services of the user equipment not be lowered because the WLAN AP cannot meet a service quality requirement of all the services, thereby improving user experience.

FIG. 8 is a schematic structural diagram of user equipment 800 according to another aspect of the embodiments of the present invention. The user equipment 800 may be the user equipment in any one of the embodiments shown in FIG. 1 to FIG. 6. Details about the concepts or processes described in any one of the embodiments in FIG. 1 to FIG. 6 may not be described again in this embodiment. The user equipment 800 includes a transmitter 801 and a receiver 802.

The transmitter 801 is configured to send a handover request to a first device, where the handover request is used to request to hand over services of the user equipment 800 to a first target device.

The receiver 802 is configured to receive a handover command sent by the first device, where the handover command is used to instruct the user equipment 800 to hand over at least one service of the services to the first target device and hand over the other service or services to a second target device.

Optionally, the transmitter 801 is further configured to send characteristic information to the first device, where the characteristic information is used for the first device to determine to hand over the part of the services to the first target device. The first device may use the characteristic information to determine a service whose service quality requirement is met by the first target device, and determine to hand over this part of the services to the first target device.

Optionally, the characteristic information includes at least one of the following information: signal transmit power headroom of the first target device, a service level capability supported by the first target device, a security hardening capability supported by the first target device, a maximum transmission rate supported by the first target device for the services, load of the first target device, and a correspondence between a service type of the services and a data buffer size of the services.

In this embodiment, the first target device is a WLAN AP, and the second target device is a 3GPP access device. The first device and the second target device may be a same device; or the first device and the first target device may be a same device; or the first device may be a second WLAN AP, where the second WLAN AP is different from the first target device; or the first device is a centralized control node.

If the first device is the centralized control node, the transmitter 801 is specifically configured to send the handover request to the first device, by using the first target device, and the receiver 802 is specifically configured to receive, by using the first target device, the handover command sent by the first device; or the transmitter 801 is specifically configured to send the handover request to the first device by using the first target device, and the receiver 802 is specifically configured to receive, by using the second target device, the handover command sent by the first device; or the transmitter 801 is specifically configured to send the handover request to the first device by using a third WLAN AP, and the receiver 802 is specifically configured to receive, by using the third WLAN AP, the handover command sent by the first device, where the third WLAN AP is different from the first target device.

In the used user equipment 800 provided in this embodiment of the present invention, a first device determines to hand over a part of services of the user equipment 800 to a first target device that can meet a service quality requirement of the part of the services, and hand over the other service or services whose service quality requirement cannot be met by the first target device to a second target device, which not only can ensure offloading of the services by using the first target device, but also can make service quality of the services of the user equipment not be lowered because the first target device cannot meet a service quality requirement of all the services, thereby improving user experience.

In a specific implementation process, in any one of the method embodiments in FIG. 1 to FIG. 6, all steps can be implemented by using a hardware integrated logic circuit or a software instruction in a processor, a transmitter, and a receiver. The steps of the methods disclosed with reference to the embodiments of the present invention may be executed by a hardware processor directly, or by a combination of hardware and software modules in a processor. The software module may reside in a mature storage medium in the field, such as a random access memory, a flash memory, a read-only memory, a programmable read-only memory or an electrically erasable programmable memory, or a register.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service handover method, comprising:
receiving, by a first device, a handover request sent by user equipment UE, wherein the handover request is used to request to hand over services of the UE to a first target device; and
sending, by the first device, a handover command to the UE, wherein the handover command is used to instruct the UE to hand over at least one service of the services to the first target device and hand over the other service or services to a second target device.

2. The method according to claim 1, wherein before the sending, by the first device, a handover command to the UE, the method further comprises:
determining, by the first device, to hand over at least one service of the services to the first target device, wherein
at least one of the following information of the first target device is not lower than that of a source device of the UE: signal transmit power headroom, a supported service level capability, a supported security hardening capability, and a maximum transmission rate supported for the services, wherein the source device of the UE is serving the UE when the UE sends the handover instruction; or
a result of measuring a signal of the first target device by the UE is greater than or equal to a first threshold; or
load of the first target device is less than or equal to a second threshold.

3. The method according to claim 1 or 2, wherein before the sending, by the first device, a handover command to the UE, the method further comprises:
determining, by the first device, to hand over the other service or services to the second target device, wherein a service quality requirement of the other service or services is higher than a service quality requirement of the at least one service of the services.

4. The method according to any one of claims 1 to 3, wherein the at least one service of the services that the first device determines to hand over to the first target device comprises: a service, in the services, of which a service type is a non-multimedia service; or a service, in the services, of which a service type is a multimedia service whose data buffer size is greater than or equal to a preset threshold.

5. The method according to any one of claims 1 to 4, wherein the other service or services that the first device determines to hand over to the second target device comprises: a service, in the services, of which a service type is a multimedia service whose data buffer size is less than a preset threshold.

6. The method according to any one of claims 1 to 5, wherein the first target device is a wireless local area network access point WLAN AP, and the second target device is a 3rd Generation Partnership Project 3GPP access device.

7. The method according to claim 6, wherein the first device is any one of the following devices:
the 3GPP access device;
the WLAN AP;
a second WLAN AP, wherein the second WLAN AP is different from the WLAN AP; and
a centralized control node, wherein the centralized control node is configured to manage the first target device and the second target device.

8. The method according to claim 7, wherein when the first device is the centralized control node,
the first device receives, by using the first target device, the handover request sent by the UE, and sends the handover command to the UE by using the first target device; or
the first device receives, by using the second target device, the handover request sent by the UE, and sends the handover command to the UE by using the second target device; or
the first device receives, by using a third WLAN AP, the handover request sent by the UE, and sends the handover command to the UE by using the third WLAN AP, wherein the third WLAN AP is different from the first target device.

9. A service handover method, comprising:
sending, by user equipment UE, a handover request to a first device, wherein the handover request is used to request to hand over services of the UE to a first target device; and
receiving, by the UE, a handover command sent by the first device, wherein the handover command is used to instruct the UE to hand over at least one service of the services to the first target device and hand over the other service or services to a second target device.

10. The method according to claim 9, wherein the method further comprises:
sending, by the UE, characteristic information to the first device, wherein the characteristic information is used for the first device to determine to hand over at least one service of the services to the first target device.

11. The method according to claim 10, wherein the characteristic information comprises at least one of the following information: signal transmit power headroom of the first target device, a service level capability supported by the first target device, a security hardening capability supported by the first target device, a maximum transmission rate supported by the first target device for the services, load of the first target device, and a correspondence between a service type of the services and a data buffer size of the services.

12. The method according to any one of claims 9 to 11, wherein the first target device is a wireless local area network access point WLAN AP, and the second target device is a 3rd Generation Partnership Project 3GPP access device.

13. The method according to claim 12, wherein the first device is any one of the following devices:
the 3GPP access device;
the WLAN AP;
a second WLAN AP, wherein the second WLAN AP is different from the WLAN AP; and
a centralized control node, wherein the centralized control node is configured to manage the first target device and the second target device.

14. The method according to claim 13, wherein when the first device is the centralized control node,
the UE sends the handover request to the first device by using the first target device, and receives, by using the first target device, the handover command sent by the first device; or
the UE sends the handover request to the first device by using the second target device, and receives, by using the second target device, the handover command sent by the first device; or
the UE sends the handover request to the first device by using a third WLAN AP, and receives, by using the third WLAN AP, the handover command sent by the first device, wherein the third WLAN AP is different from the first target device.

15. A network device for a service handover, comprising:
a receiver, configured to receive a handover request sent by user equipment UE, wherein the handover request is used to request to hand over services of the UE to a first target device; and
a transmitter, configured to send a handover command to the UE, wherein the handover command is used to instruct the UE to hand over at least one service of the services to the first target device and hand over the other service or services to a second target device.

16. The device according to claim 15, wherein the device further comprises:
a processor, configured to determine, before the transmitter sends the handover command to the UE, to hand over at least one service of the services to the first target device, wherein
at least one of the following information of the first target device is not lower than that of a source device of the UE: signal transmit power headroom, a supported service level capability, a supported security hardening capability, and a maximum transmission rate supported for the services, wherein the source device of the UE is serving the UE when the UE sends the handover instruction; or
a result of measuring a signal of the first target device by the UE is greater than or equal to a first threshold; or
load of the first target device is less than or equal to a second threshold.

17. The device according to claim 15 or 16, wherein
the processor is further configured to determine, before the transmitter sends the handover command to the UE, to hand over the other service or services to the second target device, wherein a service quality requirement of the other service or services is higher than a service quality requirement of the at least one service of the services.

18. The device according to any one of claims 15 to 17, wherein the at least one service of the services that the processor determines to hand over to the first target device comprises: a service, in the services, of which a service type is a non-multimedia service; or a service, in the services, of which a service type is a multimedia service whose data buffer size is greater than or equal to a preset threshold.

19. The device according to any one of claims 15 to 18, wherein the other service or services that the processor determines to hand over to the second target device comprises: a service, in the services, of which a service type is a multimedia service whose data buffer size is less than a preset threshold.

20. The device according to any one of claims 15 to 19, wherein the first target device is a wireless local area network access point WLAN AP, and the second target device is a 3rd Generation Partnership Project 3GPP access device.

21. The device according to claim 20, wherein the network device is any one of the following devices:
the 3GPP access device;
the WLAN AP;
a second WLAN AP, wherein the second WLAN AP is different from the WLAN AP; and
a centralized control node, wherein the centralized control node is configured to manage the first target device and the second target device.

22. The device according to claim 21, wherein when the network device is the centralized control node,
the receiver receives, by using the first target device, the handover request sent by the UE, and the transmitter sends the handover command to the UE by using the first target device; or
the receiver receives, by using the second target device, the handover request sent by the UE, and the transmitter sends the handover command to the UE by using the second target device; or
the receiver receives, by using a third WLAN AP, the handover request sent by the UE, and the transmitter sends the handover command to the UE by using the third WLAN AP, wherein the third WLAN AP is different from the first target device.

23. User equipment, comprising:
a transmitter, configured to send a handover request to a first device, wherein the handover request is used to request to hand over services of the user equipment to a first target device; and
a receiver, configured to receive a handover command sent by the first device, wherein the handover command is used to instruct the user equipment to hand over at least one service of the services to the first target device and hand over the other service or services to a second target device.

24. The user equipment according to claim 23, wherein
the transmitter is further configured to send characteristic information to the first device, wherein the characteristic information is used for the first device to determine to hand over at least one service of the services to the first target device.

25. The user equipment according to claim 24, wherein the characteristic information comprises at least one of the following information: signal transmit power headroom of the first target device, a service level capability supported by the first target device, a security hardening capability supported by the first target device, a maximum transmission rate supported by the first target device for the services, load of the first target device, and a correspondence between a service type of the services and a data buffer size of the services.

26. The user equipment according to any one of claims 23 to 25, wherein the first target device is a wireless local area network access point WLAN AP, and the second target device is a 3rd Generation Partnership Project 3GPP access device.

27. The user equipment according to claim 26, wherein the first device is any one of the following devices:
the 3GPP access device;
the WLAN AP;
a second WLAN AP, wherein the second WLAN AP is different from the WLAN AP; and
a centralized control node, wherein the centralized control node is configured to manage the first target device and the second target device.

28. The user equipment according to claim 27, wherein when the first device is the centralized control node,
the transmitter is specifically configured to send the handover request to the first device by using the first target device, and the receiver is specifically configured to receive, by using the first target device, the handover command sent by the first device; or
the transmitter is specifically configured to send the handover request to the first device by using the first target device, and the receiver is specifically configured to receive, by using the second target device, the handover command sent by the first device; or
the transmitter is specifically configured to send the handover request to the first device by using a third WLAN AP, and the receiver is specifically configured to receive, by using the third WLAN AP, the handover command sent by the first device, wherein the third WLAN AP is different from the first target device.
